Europäisches Patentamt

**European Patent Office**

Office européen des brevets

(11) Numéro de publication: **0 013 990**
**B1**

(12)

# FASCICULE DE BREVET EUROPEEN

(45) Date de publication du fascicule du brevet:
01.12.82

(51) Int. Cl.³: **H 04 L 25/49**, H 04 L 3/00,
H 04 L 25/52, H 04 L 1/10

(21) Numéro de dépôt: 80100370.8

(22) Date de dépôt: 24.01.80

(54) Procédé de transmission série d'informations binaires et dispositifs pour sa mise en oeuvre.

(30) Priorité: 30.01.79 FR 7902262

(43) Date de publication de la demande:
06.08.80 Bulletin 80/16

(45) Mention de la délivrance du brevet:
01.12.82 Bulletin 82/48

(84) Etats contractants désignés:
CH DE FR GB IT NL

(73) Titulaire: **COMPAGNIE LYONNAISE DE TRANSMISSIONS OPTIQUES Société anonyme dite:,
170, Quai de Clichy, F-92111 Clichy (FR)**

(72) Inventeur: **Tache, Jean-Paul, Moncey Saint-Laurent d'Agny, F-69440 Mornant (FR)**

(74) Mandataire: **Weinmiller, Jürgen et al, Zeppelinstrasse 63, D-8000 München 80 (DE)**

(56) Documents cités:
FR-A-1 603 165

DEUXIÈME COLLOQUE EUROPÉEN SUR LES TRANSMISSIONS PAR FIBRE OPTIQUE, 27-30 septembre 1976, Paris, FR; R. Auffret et al., «Etudes comparatives de codes à 2 et 3 niveaux pour une liaison numérique à 34 Mbit/s sur fibre optique», pp. 343-349.
CÂBLES ET TRANSMISSIONS, vol. 32, No 2, avril 1978, Paris, FR; J.M. Camborde et al., «Equipements de ligne pour système de transmission à 140 Mbit/s sur câble à paires coaxiales», pp. 278-337. →

→ CÂBLES ET TRANSMISSIONS, vol. 29, numéro spécial, décembre 1975, Paris, FR; J.P. Prigent et al., «II.6-Equipement de ligne TNL52 pour système de transmission numérique à 51,747 Mbit/s sur câble à paires coaxiales de 1,2/4,4 mm», pp. 434-56.

Procédé de transmission en série d'informations binaires et dispositifs pour sa mise en œuvre

La présente invention concerne la transmission notamment sur fibres optiques.

Dans un réseau de transmission numérique, l'élément de signal de base est constitué par le multiplex du premier ordre au débit de 2,048 Mbit/s correspondant à une capacité de 30 voies téléphoniques. A la jonction entre équipements, ce signal est transmis par câbles électriques au moyen d'un code bipolaire haute densité désigné par HDB$_3$ et normalisé par le CCITT.

Le code HDB$_3$ est un cas particulier du code HDBn qui est un code bipolaire à trois niveaux (−, 0, +) dans lequel:
— les uns binaires sont représentés par des impulsions rectangulaires de rapport cyclique 1/2 alternativement positives et négatives, et
— les zéros binaires sont représentés par des intervalles de temps vides, sauf lorsqu'ils se succèdent en nombre supérieur à n, auquel cas toute séquence de n + 1 zéros successifs est remplacée par une séquence de remplissage à n + 1 éléments dont tous les éléments sont des zéros à l'exception du premier et du dernier, le dernier élément étant un viol de bipolarité, c'est-à-dire une impulsion de rapport cyclique 1/2 de même polarité que la dernière qui l'a précédé, le premier élément étant soit un zéro soit un 1 bipolaire normal, le choix s'effectuant de manière que la polarité d'un viol soit différente de celle du dernier viol antérieur.

Un signal numérique codé en HDBn présente des redondances: au plus n + 1 intervalles de temps vides et des viols de polarité alternés qui facilitent la récupération du rythme et l'élimination de la composante continue et qui permettent, en outre, de détecter certaines erreurs en ligne.

Les systèmes actuels de transmission par fibres optiques utilisent des sources de lumière modulées en tout ou rien, qui ne permettent pas l'utilisation des codes bipolaires mais uniquement celle des codes binaires. Parmi ces derniers, l'un des plus utilisés est le code CMI (inversion codée des uns) dans lequel:
— les uns binaires sont représentés alternativement soit par une impulsion rectangulaire de rapport cyclique 1, soit par un intervalle de temps vide, et
— les zéros binaires sont représentés par une impulsion rectangulaire de rapport cyclique 1/2 située dans la première moitié d'un intervalle de temps ou, selon une variante, dans la deuxième moitié d'un intervalle de temps.

Dans les systèmes connus, on effectue, à la transition entre une jonction normalisée codée en HDB$_3$ et une liaison par fibres optiques codée en CMI, un transcodage avec décodage intermédiaire. Cela a pour inconvénient de ne pas permettre à la réception le contrôle des erreurs affectant le signal codé en HDB$_3$ à la jonction d'émission, car les informations dues à la redondance du code HDB$_3$ sont perdues dans le décodage intermédiaire utilisé lors du transcodage

HDB$_3$-CMI au départ de la liaison par fibres optiques. En effet, une longue suite de zéros ou des viols de polarité non alternés affectant le signal codé en HDB$_3$ à la jonction d'émission disparaissent au cours des transcodages HDB$_3$-CMI et CMI-HDB$_3$.

La présente invention a pour but d'éviter l'inconvénient précité grâce à un codage binaire pour la transmission sur fibres optiques, lequel permet, dans le cas d'une liaison entre deux jonctions normalisées en HDBn, de restituer, côté réception, un signal codé en HDB$_3$ rigoureusement identique à celui de la jonction émission.

Elle a pour objet un procédé de transmission en série d'informations binaires dans lequel chaque information est transmise sous la forme d'un signal élémentaire occupant un intervalle de temps dit moment binaire. Ce procédé consiste:
— à traduire chaque information binaire d'une première valeur par un élément de signal ayant alternativement soit un premier niveau, soit un deuxième niveau, maintenus l'un et l'autre pendant toute la durée du moment binaire,
— a traduire chaque information binaire d'une deuxième valeur, n'appartenant pas à une séquence de n + 1 informations successives de la deuxième valeur, par un élément de signal du premier niveau maintenu pendant la première moitié du moment binaire et suivi par un élément de signal du deuxième niveau maintenu pendant la deuxième moitié du moment binaire, et
— à traduire les informations binaires d'une séquence de n + 1 informations successives de la deuxième valeur selon la règle précédente, à l'exception de la première et de la dernière, la première étant traduite selon la règle précédente comme une information de la deuxième valeur, sauf dans le cas où les informations binaires de la première valeur apparues depuis la précédente séquence de n + 1 informations binaires successives de la deuxième valeur sont en nombre pair, cas où elle est traduite comme une information binaire de la première valeur, la dernière étant traduite comme une information binaire de la première valeur, mais en violant la règle de l'alternance.

La présente invention a également pour objet un dispositif de codage et un dispositif de décodage pour la mise en œuvre du procédé de transmission précédent avec des informations binaires reçues et à restituer en code HDB$_3$.

Le dispositif de codage comporte:
— un discriminateur placé en entrée, qui sépare les impulsions du signal d'entrée en fonction de leur polarité et les restitue sous une seule polarité sur deux sorties distinctes, l'une réservée aux impulsions de polarité d'origine positive, l'autre aux impulsions de polarité d'origine négative,
— un double circuit de mise en forme connecté aux sorties du discriminateur qui, sous l'action d'un signal d'horloge synchrone avec les moments binaires du signal d'entrée, élargit les impulsions présentées sur les sorties du discriminateur et leur donne un rapport cyclique 1/1 avant de les délivrer sur deux sorties distinctes, l'une réservée aux impulsions de polarité d'origine positive, l'autre aux impulsions de polarité d'origine négative,

— un circuit PORTE connecté aux sorties du double circuit de mise en forme qui, sous l'action du signal d'horloge, émet des impulsions de rapport cyclique 1/2 en l'absence d'impulsions sur les sorties du double circuit de mise en forme, et

— un circuit sommateur connecté à la sortie du circuit PORTE et à celle des sorties du double circuit de mise en forme délivrant les impulsions de polarité d'origine positive, qui fournit le signal de sortie du dispositif de codage.

Le dispositif de décodage comporte:

— un circuit de récupération d'horloge émettant un signal d'horloge inversé dont la période correspond à un moment binaire du signal d'entrée et dont les fronts de descente coïncident avec les fronts de montée du signal d'entrée,

— une porte logique ET à deux entrées recevant, l'une le signal d'entrée du dispositif de décodage, l'autre le signal d'horloge récupéré et inversé,

— une porte logique NON OU à deux entrées connectées en parallèle sur celles de la porte logique ET,

— un circuit à retard connecté à la sortie de la porte logique NON OU qui, sous l'action du signal d'horloge récupéré et inversé, retarde d'un demi-moment binaire les impulsions disponibles à la sortie de la porte logique NON OU, et

— un amplificateur à entrées différentielles connectées, l'une à la sortie de la porte logique ET, l'autre à celle de la porte logique NON OU, ledit amplificateur délivrant le signal de sortie du dispositif de décodage.

La présente invention a aussi pour objet un dispositif de régénération et un dispositif de détection d'erreurs mettant en œuvre le procédé de transmission précédent.

Le dispositif de régénération comporte:

— un circuit de récupération d'horloge délivrant un signal d'horloge récupéré définissant les moments binaires associés aux informations contenues dans le signal à régénérer,

— un circuit à retard recevant en entrée le signal d'horloge récupéré et fournissant une version du signal d'horloge récupéré, retardé d'une durée inférieure à un demi-moment binaire, à un multiple près de moment binaire,

— un premier circuit d'échantillonnage recevant, sur une entrée d'échantillonnage, le signal à régénérer et, sur des entrées de commande d'échantillonnage, le signal d'horloge récupéré, et sa version retardée, assurant l'échantillonnage sur un court instant dans la première moitié de chaque moment binaire après une transition de la version retardée du signal d'horloge récupéré,

— un deuxième circuit d'échantillonnage recevant, sur une entrée d'échantillonnage, une version complémentée du signal à régénérer et, sur des entrées de commande d'échantillonnage, le signal d'horloge récupéré, et sa version retardée, assurant l'échantillonnage sur un court instant de la première et de la deuxième moitié de chaque moment binaire après les transitions de la version retardée du signal d'horloge récupéré, et

— une bascule bistable ayant une entrée de remise à un connectée à la sortie du premier circuit d'échantillonnage et une entrée de remise à zéro connectée à la sortie du deuxième circuit d'échantillonnage et délivrant le signal régénéré.

Le dispositif de détection d'erreurs comporte:

— un circuit de récupération d'horloge émettant un signal d'horloge inversé dont la période correspond à un moment binaire du signal d'entrée et dont les fronts de montée coïncident avec ceux de descente du signal d'entrée,

— une porte logique ET à deux entrées recevant, l'une le signal d'entrée du dispositif de détection d'erreurs, l'autre le signal d'horloge récupéré et inversé,

— une porte logique NON OU à deux entrées connectées en parallèle sur celles de la porte logique ET,

— un circuit à retard connecté à la sortie de la porte logique NON OU qui, sous l'action du signal d'horloge récupéré et inversé, retarde d'un demi-moment binaire les impulsions disponibles à la sortie de la porte logique NON OU,

— un doubleur de fréquence connecté à la suite du circuit de récupération d'horloge,

— un registre à décalage bidirectionnel à quatre étages A, B, C et D ayant une entrée d'horloge connectée à la sortie du doubleur de fréquence, des entrées parallèles de données pour les étages A, B et une entrée série de données pour décalage à droite portées au niveau logique 1; des entrées parallèles de données pour les étages C, D et une entrée série de données pour décalage à gauche portées au niveau logique 0; une entrée de commande de décalage à droite activée par le signal de sortie de la porte logique ET et une entrée de commande de décalage à gauche activée par le signal de sortie du circuit à retard, et

— un circuit logique détectant les débordements à gauche et à droite du registre à décalage ainsi que plus de deux décalages dans le même sens à l'intérieur de ce dernier et émettant en réponse, sur la sortie du dispositif de détection d'erreurs, un signal d'erreur également utilisé pour la remise à l'état initial du registre à décalage.

D'autres caractéristiques et avantages de l'invention ressortiront des revendications jointes et de la description faite ci-après, en regard du dessin dans lequel:

— la fig. 1 illustre un procédé de transmission d'informations binaires selon l'invention;

— la fig. 2 représente le schéma d'un codeur mettant en œuvre le procédé selon l'invention à partir de signaux codés en HDB$_3$;

— la fig. 3 est un ensemble de courbes explicitant le fonctionnement du codeur représenté à la fig. 2;

— la fig. 4 représente le schéma d'un décodeur utilisable pour transcoder en HDB$_3$ les signaux issus du codeur représenté à la fig. 2 ;

— la fig. 5 est un ensemble de courbes explicitant le fonctionnement du décodeur représenté à la fig. 4;

— la fig. 6 est le schéma d'un circuit de récupération d'horloge utilisable pour le décodeur représenté à la fig. 4;

— la fig. 7 est le schéma d'un dispositif de régénération utilisable pour le signal délivré par le codeur représenté à la fig. 2;

— la fig. 8 est un ensemble de courbes explicitant le fonctionnement du circuit de régénération représenté à la fig. 6;

— la fig. 9 représente le schéma d'une réalisation possible du circuit à retard utilisé dans le dispositif de régénération de la fig. 7, et

— la fig. 10 est le schéma d'un détecteur d'erreurs utilisable avec les signaux du codeur représenté à la fig. 2.

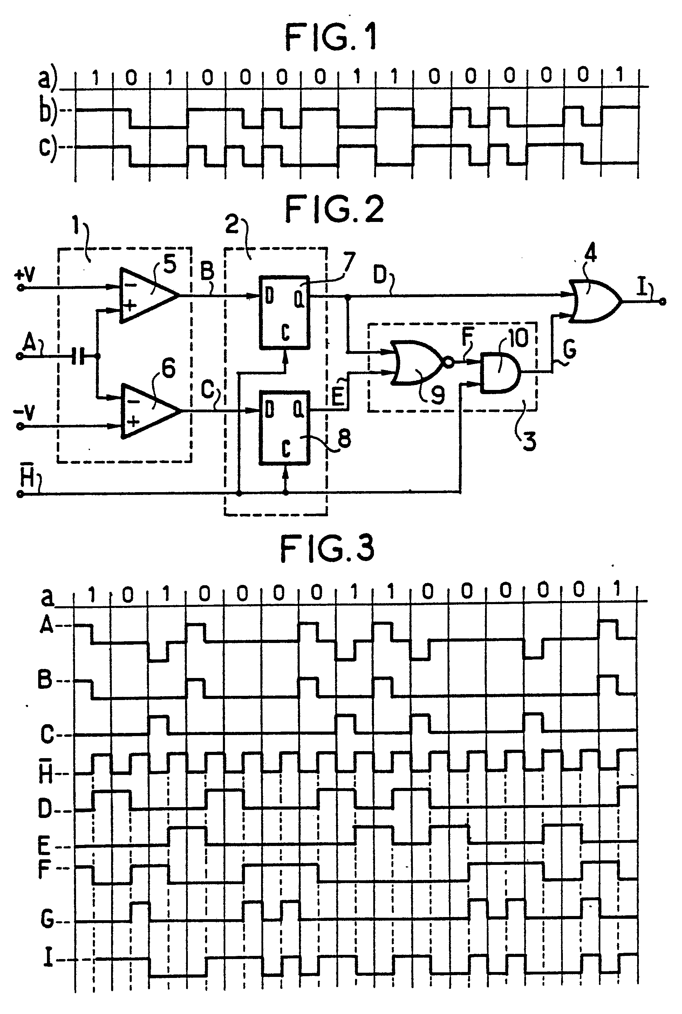

On a représenté, en a sur la fig. 1, une séquence d'informations binaires 0, 1 cadencée à la fréquence F ou de moment binaire de durée 1/F et, en b et c, deux versions d'un signal binaire évoluant entre un niveau inférieur dit niveau nul et un niveau supérieur dit niveau positif. Dans ce signal:

— une information binaire 1 est représentée alternativement, soit par une impulsion positive, soit par un niveau nul, s'étendant l'un et l'autre sur toute la durée du moment binaire considéré,

— une information binaire 0, n'appartenant pas à une séquence de quatre informations binaires successives 0, est représentée par une impulsion positive occupant la première moitié du moment binaire considéré, et

— dans chaque séquence de quatre informations binaires successives 0, les informations binaires 0 sont représentées, comme précédemment, par des impulsions positives occupant la première moitié des moments binaires considérés, à l'exception éventuellement de la première information binaire 0 de la séquence, qui est représentée comme une information binaire 1 en respectant la règle de l'alternance dans le cas où un nombre pair d'informations binaires 1 a été émis depuis la fin de la précédente séquence de quatre informations binaires successives 0, et à l'exception de la dernière information binaire 0 de la séquence qui est toujours représentée comme une information binaire 1 en violant la règle de l'alternance.

La définition précédente fait dépendre la forme du signal représentant la suite d'informations binaires a des informations binaires qui l'ont précédé. Cette forme est soit celle de la courbe b, dans le cas où le dernier viol précédant la suite d'informations binaires a, c'est-à-dire la quatrième information binaire 0 de la dernière séquence de quatre informations binaires successives 0 précédant la suite d'informations binaires a, était un niveau nul, soit celle de la courbe c, dans le cas où le dernier viol précédant la suite d'informations binaires à était un niveau positif.

Dans l'hypothèse où le viol précédant la suite d'informations binaires a était un niveau nul, c'est-à-dire le cas de la courbe b, la dernière information binaire 1 de la suite a avant la première séquence de quatre informations binaires successives 0 est représentée par un niveau nul. Cela implique, en vertu de la règle de l'alternance, que les informations binaires 1 comprises entre les deux séquences de quatre informations binaires successives 0 sont en nombre pair et qu'il y a donc lieu de représenter la première information binaire 0 de la première séquence de quatre informations binaires successives 0 de la suite a comme une information binaire 1 en respectant la règle de l'alternance, c'est-à-dire par une impulsion positive s'étendant sur tout le moment binaire.

De même, en se reportant à la courbe c, on constate que la dernière information binaire 1 précédant la première séquence de quatre informations binaires successives 0 est représentée par un niveau nul. Puisque, par hypothèse, le dernier viol précédant la suite d'informations binaires a était dans ce cas un niveau positif, la règle de l'alternance implique que les informations binaires 1 entre les deux séquences de quatre informations binaires successives 0 sont en nombre impair, et qu'il y a donc lieu de représenter la première information binaire 0 de la première séquence de quatre informations binaires successives 0 de la suite a comme une information binaire 0 ordinaire, c'est-à-dire par une impulsion positive occupant la première moitié du moment binaire considéré.

La quatrième information binaire 0 de la première séquence de quatre informations binaires successives 0 de la suite a est représentée sur la courbe b par une impulsion positive et sur la courbe c par un niveau nul, s'étendant l'un et l'autre sur tout le moment binaire considéré. Dans les deux cas, cette quatrième information binaire 0 est représentée comme une information 1, en violant la règle de l'alternance qui consiste à faire succéder à une absence d'impulsion pendant un moment binaire une impulsion positive occupant tout un moment binaire, et réciproquement, cela sans tenir compte des impulsions positives occupant des demi-moments binaires.

Avec la définition adoptée, la règle de l'alternance est respectée au niveau des viols qui ont toujours lieu alternativement au niveau positif puis au niveau nul, ou inversement.

Le codage binaire qui vient d'être décrit peut être généralisé en remplaçant dans sa définition les séquences de quatre informations binaires successives 0 par des séquences de n+1 informations binaires successives 0. Il peut également être modifié en décalant les impulsions positives représentant des informations binaires 0 n'appartenant pas à des séquences de n+1 informations binaires successives 0 de la première à la deuxième moitié des moments binaires. Par ailleurs, on peut interchanger les représentations des informations binaires 0 et 1 ou remplacer les impulsions positives par des impulsions négatives.

La récupération du rythme est aisée, car le signal obtenu comporte au moins une transition par moment binaire. Elle peut se faire par filtrage autour de la fréquence de rythme ou par synchronisation d'un oscillateur fonctionnant à la fréquence de rythme sur les transitions de 0 à 1 du signal.

Le codage binaire qui vient d'être décrit présente les mêmes redondances qu'un code bipolaire HDBn, ce qui, d'une part, simplifie les opérations de transcodage par rapport au code HDBn et, d'autre part, permet d'assurer la continuité de la surveillance des erreurs de codage dans les systèmes de transmission où il est utilisé pour relier des jonctions codées en HDBn. Pour illustrer cette dernière propriété, on va décrire plus spécialement un codeur fonctionnant à partir du $HDB_3$ et un décodeur aboutissant au $HDB_3$. Pour obtenir un codeur fonctionnant à partir des informations binaires elles-mêmes, il suffira de faire précéder le codeur que l'on va décrire d'un codeur $HDB_3$. De même, pour obtenir un décodeur fournissant les informations binaires elles-mêmes, il suffira de faire suivre le décodeur que l'on va décrire d'un décodeur $HDB_3$. Le codeur et le décodeur $HDB_3$ ne seront pas détaillé, car ils font partie de l'art connu. Des exemples en sont décrits, notamment, dans l'article de T.A. Moore intitulé «Digital transmission codes: properties of $HDB_3$ and related ternary codes with reference to broadcast signal distribution» paru dans la revue *The Radio and Electronic Engineer*, vol. 44, N° 8, août 1975, pp. 421-426.

La fig. 2 représente le schéma d'un codeur fonctionnant à partir d'informations binaires cadencées préalablement mises sous forme $HDB_3$ et du signal d'horloge associé définissant les moments binaires occupés par ces informations. Ce codeur comporte:

— un discriminateur 1 dont l'entrée correspond à l'entrée signal A du codeur et qui sépare les impulsions du signal d'entrée en fonction de leurs polarités et les restitue sous une seule polarité sur deux sorties distinctes, l'une B réservée aux impulsions de polarité d'origine positive, l'autre C réservée aux impulsions de polarité d'origine négative,

— un double circuit de mise en forme 2 connecté aux sorties B et C du discriminateur 1 et à une entrée horloge $\overline{H}$ du codeur qui, sous l'action du signal d'horloge, élargit les impulsions présentes sur les sorties B et C du discriminateur 1 et leur donne un rapport cyclique 1/1 avant de les délivrer sur deux sorties D et E distinctes, l'une D réservée aux impulsions de polarité d'origine positive, l'autre E aux impulsions de polarité d'origine négative,

— un circuit PORTE 3 connecté aux sorties D et E du double circuit de mise en forme 2 et à l'entrée d'horloge $\overline{H}$ du codeur qui, sous l'action du signal d'horloge, émet des impulsions de rapport cyclique 1/2 en l'absence d'impulsions sur les sorties D et E du double circuit de mise en forme 2, et

— un circuit sommateur 4 connecté à la sortie G du circuit PORTE 3 et à la sortie D du double circuit de mise en forme 2, qui délivre le signal de sortie du codeur.

Le discrimintateur 1 comporte deux comparateurs 5 et 6 connectés, l'un 5 par son entrée non inverseuse à l'entrée signal A du codeur et par son entrée inverseuse à une source de tension de référence positive, et l'autre 6 par son entrée inverseuse à l'entrée signal A du codeur par son entrée non inverseuse à une source de tension de référence négative, les tensions de référence positive et négative étant, en valeur absolue, inférieures aux amplitudes des impulsions du signal d'entrée codé en $HDB_3$.

Le double circuit de mise en forme 2 comporte deux bascules de type D7 et 8 connectées par leur entrée de données, l'une 7 à la sortie B du discriminateur 1, l'autre 8 à la sortie C de ce dernier, et par leur entrée d'horloge à l'entrée d'horloge $\overline{H}$ du codeur.

Le circuit 3 comporte une porte logique NON OU 9 à deux entrées connectées aux deux sorties D et E du double circuit de mise en forme 2 et une porte logique ET 10 à entrées, l'une connectée à la sortie F de la porte logique NON OU 9, l'autre à l'entrée d'horloge $\overline{H}$ du codeur.

Le circuit sommateur 4 comporte une porte logique OU à deux entrées connectées, l'une à la sortie D du double circuit de mise en forme 2, l'autre à la sortie G du circuit PORTE 3.

Le codage à partir d'un signal sous forme $HDB_3$ est plus simple qu'à partir des informations binaires elles-mêmes, car un certain nombre d'opérations nécessaires au codage sont faites lors de la mise en forme en $HDB_3$, notamment la distinction entre les informations binaires 1 en fonction de leur rang pair ou impair et la détermination des première et dernière informations d'une séquence de quatre informations binaires successives 0, y compris les viols de la règle de l'alternance. Il est obtenu selon la règle suivante:

— une impulsion positive du signal d'entrée sous forme $HDB_3$ est élargie de manière à occuper tout un moment binaire;

— une impulsion négative du signal d'entrée sous forme $HDB_3$ est ignorée;

— une absence d'impulsions pendant un moment binaire du signal d'entrée sous forme $HDB_3$ est transformée en une impulsion occupant la première moitié d'un moment binaire. Cette règle est biunivoque. L'application de sa réciproque permet de retrouver au décodage un signal en tout point identique à celui qui a été codé. Elle rend par conséquent possible la surveillance à la réception des erreurs de transmission affectant le signal d'émission codé en $HDB_3$.

Le codeur applique la règle précédente avec un retard d'un demi-moment binaire. Les impulsions positives du signal d'entrée du codeur, après avoir été détectées par le discriminateur 1, sont retardées d'un demi-moment binaire et chargées par la bascule 7, qui est active sur les fronts montants de son signal d'horloge, puis transmises à la sortie du codeur par la porte logique OU 4. Les impulsions négatives du signal d'entrée du codeur, après avoir été détectées par le discriminateur 1, sont retardées d'un demi-moment binaire et élargies par la bascule 8, qui est active sur les fronts montants de son signal d'horloge, puis utilisées pour bloquer le circuit PORTE 3 sans être transmises à la sortie du codeur. L'absence d'impulsions, pendant un moment binaire, du signal d'entrée du codeur se traduit avec un retard d'un demi-moment binaire par une absence d'impulsion aux sorties B et C des bascules 7 et 8, détectée par la porte logique NON OU 9 qui débloque la porte logique ET 10. Cette dernière permet alors la transmission, en sortie du codeur, par l'intermédiaire de la porte logique OU 4, d'une impulsion d'horloge qui, compte tenu d'un demi-moment binaire de retard dû à la bascule 7, se trouve être dans la première moitié d'un moment binaire du signal de sortie du codeur.

Les diagrammes de la fig. 3 représentent la forme des signaux en différents points du codeur. En tête de ceux-ci, on a représenté la séquence d'informations binaires a reprise de la fig. 1. Les autres diagrammes sont indexés sur la gauche par des lettres majuscules reprises du schéma de la fig. 2 et repérant sur ce dernier les points où sont disponibles les signaux représentés. La forme du signal appliqué à l'entrée A du codeur est celle d'un signal en HDB$_3$ correspondant à la séquence d'informations binaires a dans l'hypothèse où le viol précédant ladite séquence était négatif, hypothèse pour laquelle on obtient, avec le procédé de transmission précédemment décrit, un signal dont la forme est représentée en b à la fig. 1. La courbe représentant le signal en sortie I du codeur correspond à la courbe b de la fig. 1 à un retard d'un demi-moment binaire près.

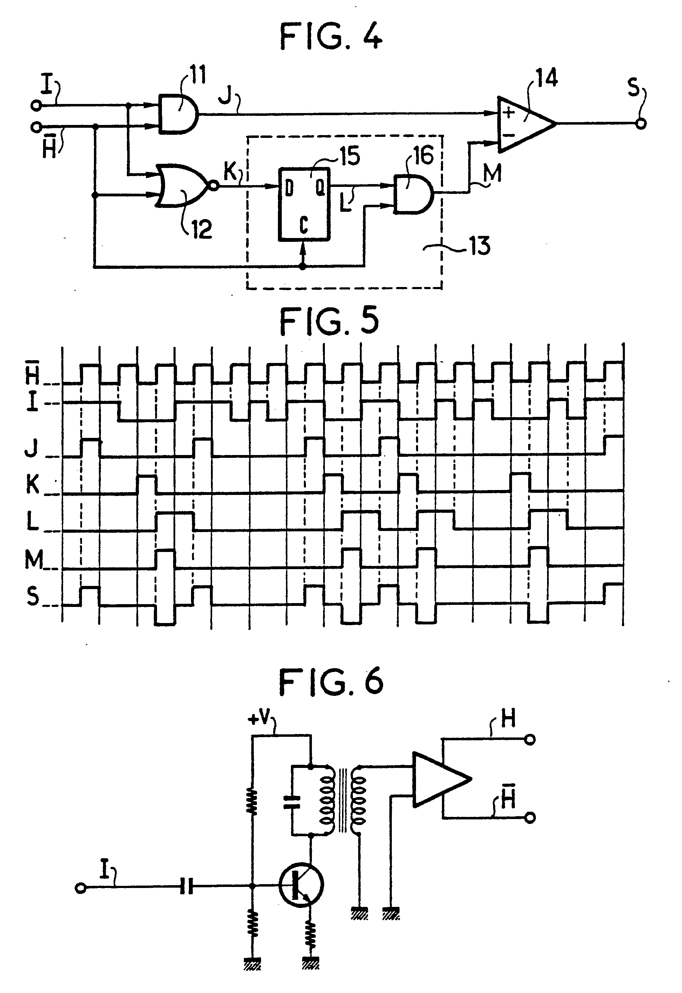

Un décodeur adapté au signal délivré par le codeur précédent est représenté à la fig. 4, à l'exception de son circuit de récupération d'horloge. On distingue sur cette figure:
— une porte logique ET 11 à deux entrées, l'une constituant celle du décodeur, l'autre étant connectée à la sortie H̄ d'un circuit de récupération d'horloge,
— une porte logique NON OU 12 à deux entrées connectées en parallèle sur celles de la porte logique ET 11,
— un circuit à retard 13 connecté à la sortie K de la porte logique NON OU 12 apportant un retard égal à un demi-moment binaire, et
— un amplificateur différentiel 14 dont l'entrée inverseuse est connectée à la sortie J de la porte logique ET 11 et dont l'entrée non inverseuse est connectée à la sortie M du circuit à retard 13.

Le circuit à retard 13 comporte une bascule de type D 15, active sur les fronts de montée de son signal d'horloge, et une porte logique ET à deux entrées 16. La bascule de type D 15 est connectée par son entrée de données à la sortie K de la porte logique NON OU 12 et par son entrée d'horloge à la sortie H̄ du circuit de récupération d'horloge. La porte logique ET 16 a l'une de ses entrées connectée à la sortie non inversée de la bascule de type D 15 et l'autre à la sortie H̄ du circuit de récupération d'horloge.

Le circuit de récupération d'horloge fonctionne à partir du signal d'entrée du décodeur. Il peut être réalisé, comme représenté à la fig. 6, à l'aide d'un amplificateur à transistor chargé par un circuit oscillant LC à coefficient de surtension élevé et accordé sur la fréquence d'horloge, et suivi par un amplificateur de mise en forme rectangulaire à deux sorties complémentaires, l'une H délivrant un signal d'horloge récupéré dont les fronts montants coïncident avec ceux du signal d'entrée du décodeur, c'est-à-dire avec le début des moments binaires, et l'autre H̄ délivrant un signal d'horloge récupéré et inversé dont les fronts descendants coïncident avec les fronts montants du signal d'entrée du décodeur.

Le décodage s'effectue selon la règle inverse appliquée au codage:
— une impulsion s'étendant sur tout un moment binaire est transformée en une impulsion positive occupant la première moitié du moment binaire;
— une absence d'impulsion pendant tout un moment binaire est transformée en une impulsion négative occupant la première moitié du moment binaire;
— une impulsion pendant la première moitié d'un moment binaire est ignorée.

Les impulsions occupant tout un moment binaire du signal d'entrée du décodeur sont repérables par leur présence dans la deuxième moitié d'un moment binaire et sont détectées de cette manière, à l'aide de la porte logique ET 11, avec un retard d'un demi-moment binaire.

Les moments binaires sans impulsion dans le signal d'entrée du décodeur sont repérables par l'absence d'impulsion dans leur première moitié et sont détectés de cette façon, à l'aide de la porte logique NON OU 12, sans aucun retard.

Le circuit à retard 13 permet de synchroniser les détections des impulsions et des absences d'impulsion occupant tout un moment binaire. La bascule de type D 15 activée au milieu de chaque moment binaire par le signal de récupération d'horloge disponible en H̄ effectue cette synchronisation en apportant un retard d'un demi-moment binaire aux impulsions délivrées par la porte logique NON OU 12. La porte logique ET 16 calibre les impulsions délivrées par la bascule de type D 15.

L'amplificateur différentiel 14 délivre un signal bipolaire dont les impulsions positives correspondent à celles délivrées par la porte logique ET 12 et dont les impulsions négatives correspondent aux impulsions positives délivrées par le circuit à retard 13.

Les diagrammes de la fig. 5 représentent la forme des signaux en différents points du décodeur. Ils sont indexés sur la gauche par des lettres majuscules reprises sur le schéma de la fig. 4 et repérent sur ce dernier les points où sont disponibles les signaux représentés. Le signal d'horloge récupéré disponible en H̄ présente, comme le signal d'horloge utilisé au codage, un front de montée au milieu de chaque moment binaire. La forme du signal appliqué à l'entrée I du décodeur est celle du signal de sortie du codeur représenté sous la même indexation dans la fig. 3, obtenu à partir d'un signal sous forme HDB$_3$ appliqué à l'entrée du codeur, et représenté en A à la fig. 3. Il donne lieu, en sortie du décodeur, à un signal bipolaire dont la forme représentée en S à la fig. 5 correspond à celle du signal d'entrée du codeur représentée en A à la fig. 3, à un retard d'un demi-moment binaire près.

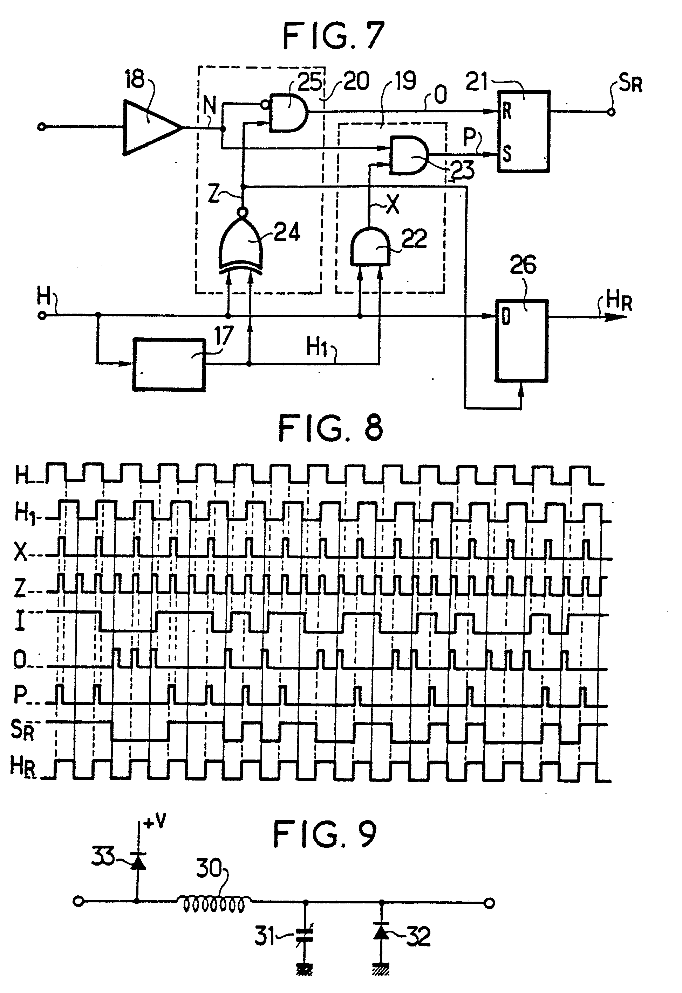

La fig. 7 représente le schéma d'un dispositif de régénération utilisable pour remettre en forme le signal délivré par le codeur représenté à la fig. 2. Ce dispositif de régénération est, comme le décodeur précédent, représenté sans son circuit de récupération d'horloge. On distingue sur cette figure:

— un circuit à retard 17 connecté à la sortie H d'un circuit de récupération d'horloge non représenté, retardant le signal d'horloge récupéré d'une durée inférieure à un demi-moment binaire, à un multiple près de moment binaire,

— un circuit de mise en forme 18 placé en entrée du dispositif de régénération,

— un premier circuit d'échantillonnage 19 connecté par une entrée d'échantillonnage à la sortie du circuit de mise en forme 18 et par des entrées de commande d'échantillonnage aux sorties H et $H_1$ du circuit de récupération d'horloge et du circuit à retard 17, assurant un échantillonnage du signal à régénérer sur un court instant avant la fin de la première moitié de chaque moment binaire, après une transition de la version retardée du signal d'horloge récupéré,

— un deuxième circuit d'échantillonnage 20 connecté par une entrée d'échantillonnage à la sortie du circuit de mise en forme 18 par des entrées de commande d'échantillonnage aux sorties H et $H_1$ du circuit de récupération d'horloge et du circuit à retard 17, assurant un échantillonnage du signal à régénérer sur un court instant avant la fin de la première et de la deuxième moitié de chaque moment binaire après une transition de la version retardée de l'horloge récupérée, et

— une bascule bistable 21 dont l'entrée de remise à un est connectée à la sortie P du premier circuit d'échantillonnage 19 et dont l'entrée de remise à zéro est connectée à la sortie 0 du deuxième circuit d'échantillonnage 20.

Le circuit de récupération d'horloge fonctionne à partir du signal à régénérer. Il peut être identique à celui représenté à la fig. 6. Mais la sortie utilisée est la sortie H, sur laquelle est disponible un signal d'horloge présentant des fronts montants coïncidant avec ceux du signal à régénérer.

Le circuit à retard peut être constitué, comme représenté sur la fig. 9, par une inductance 30 connectée en série entre son entrée et sa sortie et par une capacité variable 31 disposée entre sa sortie et la masse, la capacité 30 et l'inductance 31 formant un circuit oscillant en série accordé au voisinage de la fréquence d'horloge. Il est alors complété par des diodes d'écrêtage 32 et 33.

Le premier circuit d'échantillonnage 19 réalise la fonction logique ET. Il comporte une première porte logique ET 22 à deux entrées, l'une connectée à la sortie H du circuit de récupération d'horloge, l'autre à la sortie $H_1$ du circuit à retard 17, et une deuxième porte logique ET 23 à deux entrées connectées, l'une à la sortie X de la première porte logique ET 22, l'autre à la sortie N du circuit de mise en forme 18.

Le deuxième circuit d'échantillonnage 20 comporte une première porte logique NON OU EXCLUSIF 24 à deux entrées, l'une connectée à la sortie H du circuit de récupération d'horloge, l'autre à la sortie $H_1$ du circuit à retard 17, et une porte logique ET à deux entrées 25, l'une connectée à la sortie Z de la porte logique NON OU EXCLUSIF 24, l'autre connectée par l'intermédiaire d'un inverseur à la sortie N du circuit de mise en forme 18.

La bascule bistable 21 est une bascule RS connectée par son entrée de remise à 1 à la sortie P de la porte logique ET 23 et par son entrée de remise à 0 à la sortie 0 de la porte logique ET 25. Elle délivre le signal régénéré sur sa sortie non inversée $S_R$.

On distingue également sur le schéma de la fig. 7 une bascule de type D 26, connectée par son entrée données à la sortie H du circuit d'horloge et par son entrée d'horloge à la sortie Z de la porte logique NON OU EXCLUSIF 24. Cette bascule 26 fournit sur sa sortie non inversée $H_R$ un signal d'horloge synchrone avec le signal régénéré disponible à la sortie $S_R$ de la bascule RS 21.

La régénération du signal consiste à synchroniser ses transitions sur la version retardée du signal d'horloge récupéré. Cette synchronisation est effectuée à l'aide de la bascule RS 21 dont les transitions de 0 à 1 sont commandées, sa sortie non inversée étant au niveau logique 0, par l'apparition d'un niveau logique 1 en sortie du premier circuit d'échantillonnage 19 et dont les transitions de 1 à 0 sont commandées, sa sortie non inversée étant au niveau logique 1, par l'apparition d'un niveau logique 1 en sortie du deuxième circuit d'échantillonnage 20.

Une transition de 0 à 1 du signal délivré par le codeur de la fig. 2 ne peut se produire qu'au début d'un moment binaire. Pour la régénérer, il suffit d'effectuer un échantillonnage dans la première moitié de chaque moment binaire, après la transition de 0 à 1 de la version retardée $H_1$ du signal d'horloge récupéré, c'est-à-dire pendant les instants où le signal d'horloge récupéré H et sa version retardée $H_1$ sont simultanément au niveau logique 1. L'ordre d'échantillonnage est alors délivré par la porte logique ET 22 et l'échantillonnage est effectué par la porte logique ET 23.

Une transition de 1 à 0 du signal délivré par le codeur de la fig. 2 peut se produire au début ou au milieu d'un moment binaire. Pour la régénérer, il faut effectuer un échantillonnage dans la première et la deuxième moitié de chaque moment binaire, après chaque transition de la version retardée $H_1$ du signal d'horloge récupéré, c'est-à-dire pendant les instants où le signal d'horloge récupéré H et sa version retardée $H_1$ sont simultanément dans le même état logique. L'ordre d'échantillonnage est alors délivré par la porte logique NON OU EXCLUSIF 2 et l'échantillonnage est effectué par la porte logique ET 25, la valeur de l'échantillon étant complémentée par un inverseur pour une commande correcte de la bascule RS 21.

Afin de limiter au maximum l'influence des parasites, la durée des échantillons est réduite au minimum compatible au bon fonctionnement de la bascule RS 21, en ajustant le retard apporté par le circuit à retard 17 à une valeur inférieure mais proche d'un demi-moment binaire.

Les diagrammes de la fig. 8 représentent la forme des signaux en différents points du dispositif de régénération. Ils sont indexés sur la gauche par des lettres majuscules reprises sur le schéma de la fig. 7 et repèrent sur ce dernier les points où sont disponibles les signaux représentés.

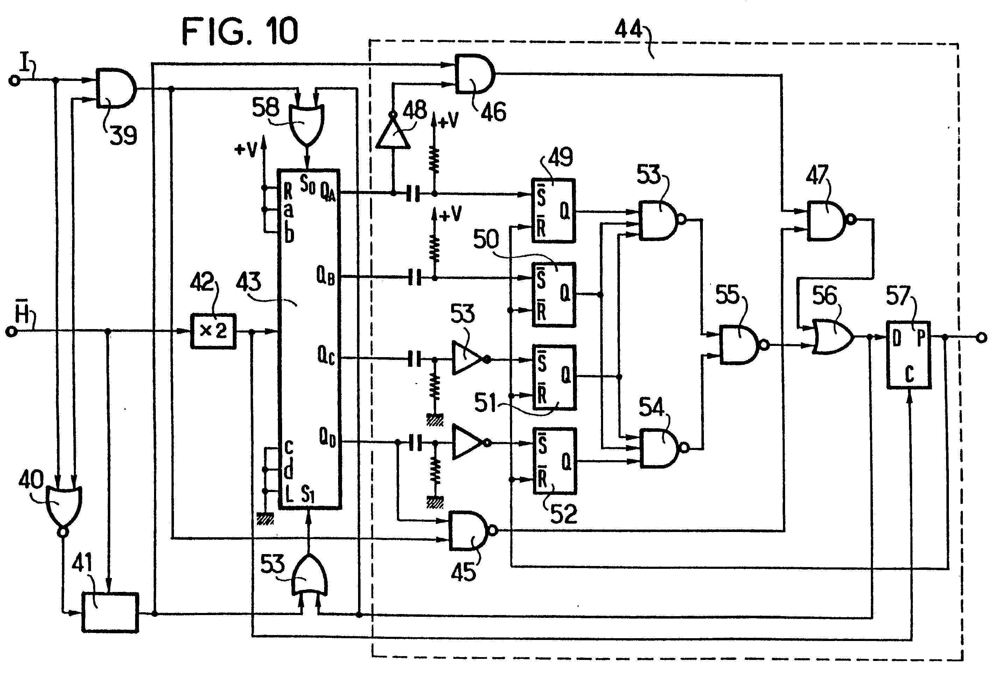

La fig. 10 représente le schéma d'un détecteur d'erreurs utilisable pour la surveillance du signal délivré par le codeur décrit en regard de la fig. 2. Le détecteur d'erreur est représenté sans son circuit de récupération d'horloge. Il comporte, outre ce dernier:

— une porte logique ET 39 à deux entrées, l'une I constituant celle du détecteur d'erreurs, l'autre étant connectée à la sortie $\overline{H}$ d'un circuit de récupération d'horloge,

— une porte logique NON OU 40 à deux entrées connectées en parallèle sur celles de la porte logique ET 39,

— un circuit à retard 41 connecté à la sortie de la porte logique NON OU 40 et à celle $\overline{H}$ du circuit de récupération d'horloge, apportant un retard d'un demi-moment binaire aux impulsions délivrées par la porte logique NON OU 40,

— un circuit doubleur de fréquence 42 connecté à la sortie $\overline{H}$ du circuit de récupération d'horloge,

— un registre à décalage bidirectionnel 43 à quatre étages A, B, C, D ayant une entrée horloge $C_1$ connectée à la sortie du circuit doubleur de fréquence 42; des entrées parallèles de données a, b pour les étages A et B, et une entrée série de données R pour décalage à droite portées au niveau logique 1; des entrées parallèles de données c, d pour les étages C et D, et une entrée série de données L portées au niveau logique 0; une entrée de commande de décalage à droite $S_0$ activée par le signal de la porte logique ET 39 et une entrée de commande de décalage à gauche $S_1$ activée par le signal de sortie du circuit à retard 41, et

— un circuit logique 44 détectant les débordements à droite et à gauche du registre à décalage 43, ainsi que plus de deux décalages dans le même sens à l'intérieur de ce dernier, et délivrant en réponse un signal d'erreur utilisé accessoirement pour la remise à l'état initial du registre à décalage 43.

Le circuit de récupération d'horloge peut être identique à celui décrit précédemment à la fig. 6. La sortie utilisée est, comme dans le cas du décodeur, la sortie $\overline{H}$, sur laquelle est disponible un signal d'horloge récupéré présentant des transitions de 0 à 1 au milieu des moments binaires associés aux informations contenues dans le signal appliqué à l'entrée I du détecteur d'erreurs.

Le circuit à retard 41 peut être réalisé comme celui 13 du décodeur représenté à la fig. 2.

Le circuit doubleur de fréquence 42 peut être réalisé à l'aide d'une porte logique NON OU EXCLUSIF à deux entrées connectées à la sortie $\overline{H}$ du circuit de récupération d'horloge, l'une directement, l'autre par l'intermédiaire d'un circuit à retard introduisant un délai égal à un demi-moment binaire. Il délivre un signal rectangulaire présentant des transitions de 0 à 1 au milieu de chaque moment binaire.

Le registre à décalage bidirectionnel 43 à quatre étages est un circuit intégré de technologie TTL connu sous le numéro 74194. Il présente deux entrées de commande de décalage $S_0$ et $S_1$ qui permettent de bloquer le registre lorsqu'elles sont toutes deux au niveau logique 0, d'autoriser les décalages à droite lorsque l'entrée de commande $S_0$ est au niveau logique 1 et l'entrée de commande $S_1$ au niveau logique 0, d'autoriser les décalages à gauche lorsque l'entrée de commande $S_1$ est au niveau logique 0 et l'entrée de commande $S_1$ au niveau logique 1, et de permettre le chargement des étages du registre par ses entrées parallèles de données a, b, c, d lorsqu'elles sont toutes deux au niveau logique 1.

Le circuit logique 44 comporte trois portes logiques NON ET 45, 46 et 47 utilisées pour la détection des débordements à droite et à gauche du registre à décalage 43. La porte logique NON ET 45 a deux entrées connectées, l'une à la sortie de la porte logique ET 39, l'autre à la sortie $Q_D$ de l'étage D du registre à décalage 43. Elle détécte les présences simultanés d'un ordre de décalage à droite et d'un niveau logique 1 en sortie de l'étage D du registre à décalage 43. La porte logique NON ET 46 a deux entrées connectées, l'une à la sortie du circuit à retard 41, l'autre à celle $Q_A$ de l'étage A du registre à décalage 43 par l'intermédiaire d'un inverseur 48. Elle détecte les présences simultanées d'un ordre de décalage à gauche et d'un niveau logique 0 en sortie de l'étage A du registre à décalage 43. La porte logique NON ET 47 a deux entrées connectées, l'une à la sortie de la porte logique NON ET 45, l'autre à la sortie de la porte logique NON ET 46. Elle émet en sortie un niveau logique 1 dès l'apparition d'un débordement à droite ou à gauche du registre à décalage 43.

Le circuit logique 44 comporte également quatre bascules RS 49, 50, 51 et 52 à entrées complémentées utilisées pour mémoriser les transitions de 1 à 0 des étages A et B du registre à décalage 43 et celles de 0 à 1 des étages C et D de ce dernier. La bascule RS 49 a son entrée complémentée $\overline{S}$ portée au niveau logique 1, grâce à une résistance qui la relie à une source de tension positive +V, et connectée par l'intermédiaire d'une capacité à la sortie $Q_A$ de l'étage A du registre à décalage 43. Une transition de 1 à 0 de l'étage A provoque, par l'intermédiaire de la capacité, une impulsion négative sur l'entrée complémentée $\overline{S}$ de la bascule RS 49 dont la sortie passe au niveau logique 1 si elle ne l'était pas déjà. Une transition de 0 à 1 de l'étage A n'a pas d'effet. La bascule RS 50, connectée de manière analogue à la sortie $Q_B$ de l'étage B du registre à décalage 43, se déclenche uniquement sur les transitions de 1 à 0 de ce dernier étage. La bascule RS 51 a son entrée complémentée $\overline{S}$ précédée d'un inverseur 53, dont l'entrée est portée au niveau logique 0 par une résistance qui la relie à la masse et connectée par l'intermédiaire d'une capacité à la sortie $Q_C$ de l'étage C du registre à décalage 43. Une transition de 0 à 1 de l'étage C provoque, par l'intermédiaire de la capacité, l'application d'une impulsion positive à l'entrée de l'inverseur 53 qui déclenche la bascule RS 51 dont la sortie passe au niveau logique 1 si elle n'y était pas déjà. Une transition de 1 à 0 de l'étage C n'a aucun effet. La bascule RS 52, connectée de manière analogue à la sortie $Q_D$ de l'étage D du registre à décalage 43, se déclenche uniquement sur les transitions de 0 à 1 de ce dernier étage. Les sorties de ces quatre bascules 49, 50, 51 et 52 sont connectées à un circuit formé de trois portes logiques NON ET 53, 54, 55, qui détecte la présence d'un niveau logique 1 sur les sorties de trois d'entre elles. La porte logique NON ET 53 a trois entrées connectées aux sorties des bascules RS 49, 50, 51. Sa sortie ne passe au niveau logique 0 que dans les cas où les sorties des bascules RS 49, 50, 51 sont toutes au niveau logique 1. La porte logique NON ET 54 a trois entrées connectées aux sorties des bascules RS 50, 51, 52. Sa sortie ne passe au niveau logique 0 que dans le cas où les sorties des bascules RS 50, 51, 52 sont toutes au niveau logique 1. La porte logique NON ET 55 a deux entrées connectées, l'une à la sortie de la porte logique NON ET 53, l'autre à la sortie de la porte logique NON ET 54. Etant donné qu'à l'état initial, le registre à décalage 43 a ses étages a et b portés au niveau logique 1 et ses étages c et d portés au niveau logique 0, la porte logique NON ET 54 émet en sortie un niveau logique 1 dès que les sorties de trois au moins des quatre étages du registre à décalage 43 ont changé de niveau.

Les sorties des portes logiques NON ET 47 et 55 sont reliées par une porte logique OU 56 à l'entrée de données d'une bascule de type D 57 et, par l'intermédiaire de deux portes logiques OU 58 et 59, aux entrées de commande de décalage du registre à décalage 43. La bascule de type D 57 a son entrée d'horloge connectée à la sortie du doubleur de fréquence 42, et sa sortie non inversée connectée à celle du détecteur d'erreurs et, également, aux entrées complémentées $\bar{R}$ des bascules RS 43, 50, 51 et 52.

Le détecteur d'erreurs qui vient d'être décrit surveille l'alternance dans le signal des impulsions occupant tout un moment binaire et des moments binaires sans impulsion. Il se déclenche lorsque cette alternance n'est pas respectée au niveau des viols.

La porte logique ET 39 placée en entrée joue un rôle analogue à celle 11 placée en entrée du décodeur représenté à la fig. 2. Elle permet de détecter les moments binaires occupés entièrement par une impulsion et, dans ces cas, émet une impulsion occupant la deuxième moitié des moments binaires considérés.

La porte logique NON OU 40, également placée en entrée, a le même rôle que celle 12 placée en entrée du décodeur représenté à la fig. 2. Elle permet de détecter les moments binaires sans impulsion et, dans ces cas, émet des impulsions occupant la première moitié des moments binaires considérés. Ces impulsions sont replacées dans la deuxième moitié des moments binaires par le circuit à retard 41. Cela permet de laisser libre la première moitié de chaque moment binaire pour, comme on le verra ultérieurement, d'éventuelles remises à zéro des bascules RS 49, 50, 51, 52 et remises à l'état initial du registre à décalage 43.

L'apparition, dans le signal d'entrée du détecteur d'erreurs, d'un moment binaire tout entier occupé par une impulsion provoque, au milieu de la deuxième moitié de celui-ci, un décalage vers la droite du registre à décalage 43; celle d'un moment binaire sans impulsion provoque, au milieu de la deuxième moitié de celui-ci, un décalage vers la gauche du registre à décalage 43; celle d'un moment binaire dont seule une moitié est occupée par une impulsion n'a aucun effet, et il n'en sera pas fait mention dans la suite.

Pour expliciter le fonctionnement du registre à décalage 43, on se place après une remise à l'état initial de ce registre à décalage 43 et une remise à zéro des bascules RS 49, 50, 51, 52.

En l'absence de viol de la règle de l'alternance dans le signal d'entrée du détecteur d'erreurs, un moment binaire occupé tout entier par une impulsion succède à un moment binaire sans impulsion, ou inversement. Il en résulte, pour le registre à décalage 43, des décalages, alternativement droite et gauche, ou inversement, qui se traduisent par des basculements entre les niveaux logiques 1 et 0 pour un des étages B et C du registre à décalage 43 et par le passage au niveau logique 1 de la bascule RS associée dès le premier basculement. On suppose pour la suite du raisonnement qu'il s'agit de l'étage B.

L'apparition du premier viol de la règle de l'alternance dans le signal d'entrée du détecteur d'erreurs produit deux décalages successifs de même sens dans le registre à décalage 43. Cela a pour effet, d'une part, de changer l'étage du registre à décalage 43 dont la sortie est susceptible de basculer entre les niveaux logiques 0 et 1 lors de la détection ultérieure de moments binaires occupés entièrement par des impulsions et des moments binaires sans impulsion se succédant de manière alternée, cet étage devenant, dans l'hypothèse considérée et selon le sens des deux décalages successifs, soit l'étage A, soit l'étage C, d'autre part, de faire passer au niveau logique 1 la sortie de la bascule RS associée au nouvel étage, soit l'étage A, soit l'étage C.

L'apparition d'un deuxième viol de la règle de l'alternance dans le signal d'entrée du détecteur d'erreurs peut avoir trois effets distincts.

Elle peut tout d'abord produire deux décalages successifs de sens opposés à ceux provoqués par le premier viol. C'est le cas où la règle de l'alternance est respectée au niveau des viols, le premier se manifestant par deux moments binaires, chacun occupé tout entier par une impulsion, et le deuxième se manifestant par deux moments binaires sans impulsion, ou réciproquement. Il n'y a alors pas d'erreurs. Les décalages produits par le deuxième viol dans le registre à décalage 43 annulent les effets des décalages produits par le premier viol, et l'étage B redevient celui dont la sortie bascule entre les niveaux logiques 0 et 1. Le détecteur d'erreurs n'émet aucune impulsion.

Elle peut également produire deux décalages successifs de même sens que ceux provoqués par le premier viol, alors que l'étage dont la sortie avait changé de niveau à la suite du premier viol était l'étage C. Ces deux décalages successifs, de même sens que ceux provoqués par le premier viol, montrent que la règle de l'alternance n'est pas respectée et qu'il y a une erreur. Ils ont pour effet de faire basculer la sortie du registre D du niveau logique 0 au niveau logique 1, ce qui entraîne le basculement de la bascule RS 52 dont la sortie passe au niveau logique 1. Les sorties des trois bascules RS 50, 51, 52 sont alors au niveau logique 1, ce qui fait passer la sortie de la porte logique NON ET 55 et celle de la porte logique OU 56 au niveau logique 1. Ce dernier provoque, au milieu de la première moitié du moment binaire suivant celui où se produit le deuxième viol (instant correspondant à l'apparition de la première transition de 0 à 1 dans le signal délivré par le circuit doubleur de fréquence 42 suivant l'apparition du niveau logique 1 en sortie de la porte logique OU 56), d'une part, la remise à l'état initial du registre à décalage 43 et, d'autre part, le passage au niveau logique 1 de la sortie de la bascule de type D 57 qui commande la remise à zéro des bascules RS 49, 50, 51, 52 et, par conséquent, la disparition du niveau logique 1 en sortie de la porte logique OU 56, disparition qui provoque, au milieu de la deuxième moitié du moment binaire suivant celui où s'est effectué le deuxième viol, le retour au niveau logique 0 de la sortie de la bascule de type D 57. L'erreur est donc signalée par l'émission en sortie du détecteur d'erreurs d'une impulsion de rapport cyclique 1/2 centrée sur le moment binaire qui suit celui où elle s'est produite.

L'apparition du deuxième viol peut enfin produire deux décalages successifs de même sens que ceux provoqués par le premier viol, alors que l'étage dont la sortie avait changé de niveau à la suite du premier viol était l'étage A. Comme précédemment, ces deux décalages successifs, de même sens que ceux provoqués par le premier viol, montrent que la règle de l'alternance n'est pas respectée au niveau des viols et qu'il y a une erreur, mais leurs effets sur le registre à décalage 43 sont différents. Avec les hypothèses adoptées, les deux décalages successifs sont des décalages à gauche. Le premier fait apparaître des niveaux logiques 0 sur les sorties de tous les étages du registre à décalage 43. Le deuxième ne modifie pas ces niveaux, car le registre à décalage 43 subit un débordement sur la gauche. Mais la commande appliquée en $S_2$ ayant entraîné ce décalage bloque la porte logique NON ET 46, ce qui fait passer la sortie de la porte logique NON ET 47 et celle de la porte logique OU 56 au niveau logique 1 dès l'apparition du deuxième viol. Ce niveau logique 1 provoque, au milieu de la deuxième moitié du moment binaire où se produit le deuxième viol (instant correspondant à la première transition de 0 à 1 du signal délivré par le doubleur de fréquence 42 après l'apparition de ce niveau logique 1), d'une part, la remise à l'état initial du registre à décalage 43 et, par conséquent, la disparition de ce niveau logique 1 et, d'autre part, le passage au niveau logique 1 de la bascule de type D 57 qui commande la remise à zéro des bascules RS 49, 50, 51 et 52. La disparition du niveau logique 1 en sortie de la porte logique OU 56, à la suite de la remise à l'état initial du registre à décalage 43, provoque le retour au niveau logique 0 de la sortie de la bascule de type D 57 au milieu de la première moitié du moment binaire qui suit le deuxième viol. L'erreur est donc signalée, en sortie du détecteur, par une impulsion de rapport cyclique 1/2 à cheval sur le moment binaire où se produit le deuxième viol et sur le moment binaire qui le suit.

Pour synchroniser les impulsions issues du détecteur d'erreurs, on peut disposer, entre la porte logique NON ET 47 et la porte logique OU 56, un circuit à retard apportant au signal de sortie de la porte NON ET 47 un retard égal à un demi-moment binaire.

On peut, sans sortir du cadre de l'invention, modifier certaines dispositions ou remplacer certains moyens par des moyens équivalents.

## Revendications

1. Procédé de transmission en série d'informations binaires dans lequel chaque information est transmise sous la forme d'un signal élémentaire occupant un intervalle de temps dit moment binaire, caractérisé en ce qu'il consiste:
— à traduire chaque information binaire d'une première valeur par un élément de signal ayant alternativement soit un premier niveau, soit un deuxième niveau, maintenus l'un et l'autre pendant toute la durée du moment binaire,
— à traduire chaque information binaire de la deuxième valeur, n'appartenant pas à une séquence de n+1 informations binaires successives de la deuxième valeur, par un élément de signal du premier niveau maintenu pendant la première moitié du moment binaire et suivi par un élément de signal du deuxième niveau maintenu pendant la deuxième moitié du moment binaire, et
— à traduire les informations binaires d'une séquence de n + 1 informations binaires successives de la deuxième valeur selon la règle précédente, à l'exception de la première et de la dernière, la première étant traduite selon la règle précédente comme une information binaire de la deuxième valeur, sauf dans le cas où les informations binaires de la première valeur apparues depuis la précédente séquence de n + 1 informations binaires successives de la deuxième valeur sont en nombre pair, cas où elle est traduite selon la règle précédente comme une information binaire de la première valeur, la dernière étant traduite selon la règle précédente comme une information binaire de la première valeur, mais en violant la règle de l'alternance.

2. Procédé selon la revendication 1, caractérisé en ce que la première valeur correspond à une valeur binaire 1, la deuxième valeur à une valeur binaire 0, le premier niveau à une valeur logique 0 et le deuxième à une valeur logique 1.

3. Codeur pour la mise en œuvre du procédé selon la revendication 2 à partir d'un signal d'informations binaires codé en HDBn et du signal d'horloge associé définissant les moments binaires occupés par ces informations, caractérisé par le fait qu'il comporte:

— un discriminateur (1) dont l'entrée (A) correspond à l'entrée signal d'informations (A) du codeur et qui sépare les impulsions du signal d'entrée d'informations en fonction de leur polarité et les restitue, sous une seule polarité, sur deux sorties distinctes, l'une (B) réservée aux impulsions de polarité d'origine positive, l'autre (C) réservée aux impulsions de polarité d'origine négative,

— un double circuit de mise en forme (2) connecté aux sorties (B, C) du discriminateur (1) et à une entrée horloge ($\overline{H}$) du codeur qui, sous l'action du signal d'horloge, élargit les impulsions disponibles sur les sorties (B, C) du discriminateur (1), leur donne un rapport cyclique 1/1 et les délivre sur deux sorties distinctes, l'une (D) réservée aux impulsions de polarité d'origine positive, l'autre (E) réservée aux impulsions de polarité d'origine négative,

— un circuit PORTE (3) connecté aux sorties (D, E) du double circuit de mise en forme (2) et à l'entrée d'horloge ($\overline{H}$) du codeur qui, sous l'action du signal d'horloge, émet sur sa sortie (G) des impulsions de rapport cyclique 1/2 en l'absence d'impulsion sur les sorties (D, E) du double circuit de mise en forme (2), et

— un circuit sommateur (4) connecté à la sortie (G) du circuit PORTE (3) et à celle (D) des sorties du double circuit de mise en forme (2) délivrant les impulsions de polarité d'origine positive, qui fournit le signal de sortie du codeur.

4. Codeur selon la revendication 3, caractérisé en ce que le discriminateur (1) comporte deux comparateurs (5, 6) connectés, l'un (5) par son entrée non inverseuse à l'entrée signal d'informations (A) du codeur et par son entrée inverseuse à une source de tension de référence positive, l'autre (6) par son entrée inverseuse à l'entrée signal d'informations (A) du codeur et par son entrée non inverseuse à une source de tension de référence négative.

5. Codeur selon la revendication 3, caractérisé en ce que le double circuit de mise en forme (21) comporte deux bascules de type D (7, 8) actives sur les transitions de 0 à 1 de leur signal d'horloge, connectées par leurs entrées données aux sorties du discriminateur (1) et par leurs entrées d'horloge à l'entrée d'horloge ($\overline{H}$) du codeur qui reçoit un signal d'horloge présentant des transitions de 0 à 1 au milieu des moments binaires.

6. Codeur selon la revendication 3, caractérisé en ce que le circuit PORTE (3) comporte une porte logique NON OU (9) à deux entrées connectées aux sorties du double circuit de mise en forme (2) et une porte logique ET (10) à deux entrées connectées l'une à la sortie de la porte logique NON OU (9) l'autre à l'entrée d'horloge ($\overline{H}$) du codeur.

7. Décodeur pour la mise en œuvre du procédé de transmission selon la revendication 2, délivrant un signal d'informations binaires sous forme HDBn, caractérisé en ce qu'il comporte:

— un circuit de récupération d'horloge émettant un signal d'horloge définissant les moments binaires associés aux informations binaires contenues dans le signal d'entrée du décodeur et dont les transitions de 0 à 1 coïncident avec celles du signal d'entrée,

— une porte logique ET (11) à deux entrées, l'une correspondant à l'entrée du décodeur, l'autre étant connectée à la sortie ($\overline{H}$) du circuit de récupération d'horloge,

— une porte logique NON OU (12) à deux entrées connectées en parallèle sur celles de la porte logique ET (11),

— un circuit à retard (13) connecté à la sortie (K) de la porte logique NON OU (12) et à celle ($\overline{H}$) du circuit de récupération d'horloge, qui retarde d'un demi-moment binaire les impulsions disponibles à la sortie de la porte logique NON OU (12), et

— un amplificateur (14) à entrées différentielles connectées, l'une à la sortie de la porte logique ET (11), l'autre à la sortie du circuit à retard (13) qui délivre le signal de sortie du décodeur.

8. Décodeur selon la revendication 7, caractérisé en ce que le circuit de récupération d'horloge comporte un amplificateur à transistor chargé par un circuit oscillant LC à coefficient de surtension élevé, accordé sur la fréquence d'horloge et suivi par un amplificateur de mise en forme rectangulaire.

9. Décodeur selon la revendication 7, caractérisé en ce que le circuit à retard comporte:

— une bascule de type D (15) connectée par son entrée données à la sortie(K) de la porte logique NON ET (12) et par son entrée horloge à la sortie ($\overline{H}$) du circuit de récupération d'horloge, ladite bascule de type D (15) étant active sur les transitions de 0 à 1 de son signal d'horloge, et

— une porte logique ET (16) à deux entrées, l'une connectée à la sortie (L) de la bascule de type D (15), l'autre connectée à la sortie ($\overline{H}$) du circuit de récupération d'horloge.

10. Dispositif de régénération adapté à un signal obtenu avec le procédé de transmission selon la revendication 2, caractérisé en ce qu'il comporte:

— un circuit de récupération d'horloge délivrant sur une sortie (H) un signal d'horloge récupéré définissant les moments binaires associés aux informations contenues dans le signal à régénérer,

— un circuit à retard (17) connecté à la sortie (H) du circuit de récupération d'horloge et fournissant une version du signal d'horloge récupéré, retardé d'une durée inférieure à un demi-moment binaire, à un multiple près de moment binaire,

— un premier circuit d'échantillonnage (19) recevant sur une entrée d'échantillonnage le signal à régénérer, connecté par des entrées de commande d'échantillonnage aux sorties (H et $H_1$) du circuit de récupération d'horloge et du circuit à retard (17), assurant l'échantillonnage sur un court instant dans la première moitié de chaque moment binaire, après une transition de la version retardée du signal d'horloge récupéré,

— un deuxième circuit d'échantillonnage (20) recevant sur une entrée d'échantillonnage une version complémentée du signal à régénérer, connecté par des entrées de commande d'échantillonnage aux sorties (H et $H_1$) du circuit de récupération d'horloge et du circuit à retard (17), assurant l'échantillonnage sur un court instant dans la première et la deuxième moitié de chaque moment binaire après les transitions de la version retardée du signal d'horloge récupére, et
— une bascule bistable (21) ayant une entrée de mise à un connectée à la sortie (P) du premier circuit d'échantillonnage (19) et une entrée de mise à zéro connectée à la sortie (O) du deuxième circuit d'échantillonnage (20), et délivrant le signal régénéré.

11. Dispositif de régénération selon la revendication 10 dans lequel le signal d'horloge récupéré délivré par le circuit de récupération d'horloge présente des transitions de 0 à 1 au début des moments binaires du signal à régénérer, caractérisé en ce que le premier circuit d'échantillonnage (19) est un circuit logique ET recevant en entrée le signal à régénérer, le signal d'horloge récupéré et sa version retardée et ne délivrant un signal de commande de remise à un à la bascule bistable (21) que lorsque les signaux précités sont simultanément au niveau logique 1, et en ce que le deuxième circuit d'échantillonnage (20) est un circuit logique recevant en entrée une version complémentée du signal à régénérer, le signal d'horloge récupéré et sa version retardée et ne délivrant un signal de commande de remise à zéro de la bascule bistable (22) que lorsque le signal à régénérer est au niveau logique 0 et que le signal d'horloge récupéré et sa version retardée sont simultanément au même niveau logique.

12. Dispositif de détection d'erreurs adapté à un signal obtenu avec le procédé de transmission selon la revendication 2, caractérisé en ce qu'il comporte:
— un circuit de récupération d'horloge délivrant un signal d'horloge récupéré et inversé définissant les moments binaires associés aux informations contenues dans le signal d'entrée et ayant des fronts de descente coïncidant avec les fronts de montée du signal précité,
— une porte logique ET (39) à deux entrées, l'une recevant le signal d'entrée du dispositif de détection d'erreurs, l'autre le signal d'horloge récupéré et inversé délivré par le circuit de récupération d'horloge,
— une porte logique NON OU (40) à deux entrées connectées en parallèle sur celles de la porte logique ET (39),
— un circuit à retard (41) connecté à la sortie de la porte logique NON OU (40) qui, sous l'action du signal d'horloge récupéré et inversé, retarde d'un demi-moment binaire les impulsions disponibles en sortie de ladite porte logique NON OU (40),
— un doubleur de fréquence (42) connecté à la suite du circuit de récupération d'horloge,
— un registre à décalage bidirectionnel (43) à quatre étages A, B, C et D ayant une entrée d'horloge connectée à la sortie du doubleur de fréquence (42), des entrées parallèles de données pour les étages A, B et une entrée série de données pour décalage à droite portées au niveau logique 1; des entrées parallèles de données pour les étages C, D et une entrée série de données pour décalage à gauche portées au niveau logique 0; une entrée de commande de décalage à droite activée par le signal de sortie de la porte logique ET (39) et une entrée de commande de décalage à gauche activée par le signal de sortie du circuit à retard (41), et
— un circuit logique détectant les débordements à droite et à gauche du registre à décalage (43) ainsi que plus de deux décalages dans le même sens à l'intérieur de ce dernier et émettant en réponse, sur la sortie du dispositif de détection d'erreurs, un signal d'erreur également utilisé pour la remise à l'état initial du registre à décalage (43).

**Claims**

1. A method for the serial transmission of binary informations in which each information is transmitted in the form of an elementary signal occupying a time interval known as the binary interval, characterized in that it consists in:
— translating each binary information of a first value by a signal element having alternatively either a first level or a second level, both maintained throughout the binary interval,
— translating each binary information of the second value, not belonging to an n + 1 sequence of successive binary informations of the second value, by a signal element of the first level maintained during the first half of the binary interval and followed by a signal element of the second level maintained during the second half of the binary interval, and
— translating the binary informations of an n + 1 sequence of successive binary informations of the second value in accordance with the above rule, with the exception of the first and the last, the first being translated according to the above rule as a binary information of the second value, except in the case where the binary informations of the first value appeared after the preceeding sequence of n + 1 successive binary informations of the second value are an even number, in which case it is translated according to the above rule as a binary information of the first value, the last being translated according to the above rule as a binary information of the first value but in contradiction of the rule of alternation.

2. A method in accordance with claim 1, characterized in that the first value corresponds to a binary 1 value, the second value to a binary 0 value, the first level to a logic value 0 and the second to a logic value 1.

3. Encoder for implementing the transmission method in accordance with claim 2 parting from a signal with binary informations encoded in HDBn and the associated clock signal defining the binary intervals occupied by these informations, characterized by the fact that it comprises:
— a discriminator (1) whose input (A) corresponds to the data signal input (A) of the encoder and which separates the data input signal pulses according to their polarity and restores them with single polarity at two separate outputs, one (B) reserved for pulses of positive origin, the other (C) reserved for pulses of negative origin,

— a double shaping circuit (2) connected to outputs (B, C) of the discriminator (1) and to an encoder clock input ($\overline{H}$) which, under the action of the clock signal, expands the pulses appearing at the outputs (B, C) of the discriminator (1), gives them a duty factor of 1/1 and delivers them at two separate outputs, one (D) reserved for pulses of positive origin, the other (E) reserved for pulses of negative origin,

— a GATING circuit (3) connected to the outputs (D, E) of the double shaping circuit (2) and to the encoder's clock input ($\overline{H}$) which, under the action of the clock signal, emits at its output (G) pulses of duty factor 1/2 in the absence of pulses at the outputs (D, E) of the double shaping circuit (2), and

— an adder (4) connected to the output (G) of the gating circuit (3) and to the output (D) of the double shaping circuit (2) delivering pulses of positive origin, which supplies the output signal of the encoder.

4. Encoder in accordance with claim 3, characterized in that the discriminator (1) comprises two comparators (5, 6), one (5) with its non-inverting input connected to the data signal input (A) of the encoder and its inverting input connected to a positive reference voltage source, and the other (6) with its inverting input connected to the data signal input (A) of the encoder and with its non-inverting input connected to a negative reference voltage source.

5. Encoder in accordance with claim 3, characterized in that the double shaping circuit (2) comprises two D-type flip-flops (7, 8) triggered by the 0-to-1 transitions of their clock signal, connected via their data inputs to the outputs of the discriminator (1) and via their clock inputs to the clock input of the encoder ($\overline{H}$) which receives a clock signal having 0-to-1 transitions in the middle of the binary intervals.

6. Encoder in accordance with claim 3, characterized in that the GATING circuit (3) comprises a logic NOR gate (9) with two inputs which are connected to the outputs of the double shaping circuit (2) and to a logic AND gate (10) with two inputs, one connected to the output of the logic NOR gate (9), the other to the encoder's clock input ($\overline{H}$).

7. Decoder to implement the transmission method in accordance with claim 2, delivering a binary information signal of the HDBn type, characterized in that it comprises:

— a clock retrieval circuit emitting a clock signal defining the binary intervals associated with the binary informations contained in the input signal of the decoder and whose 0-to-1 transitions coincide with those of the input signal,

— a logic AND gate (11) with two inputs, one corresponding to the decoder's input, the other being connected to the output ($\overline{H}$) of the clock retrieval circuit,

— a logic NOR gate (12) with two inputs connected in parallel with those of the logic AND gate (11),

— a delay circuit (13) connected to the output (K) of the logic NOR gate (12) and to that ($\overline{H}$) of the clock retrieval circuit, which delays the pulses appearing at the output of the logic NOR gate (12) by a half binary interval, and

— an amplifier (14) with differential inputs, one connected to the output of the logic AND gate (11), the other to the output of the delay circuit (13) which delivers the output signal of the decoder.

8. Decoder in accordance with claim 7, characterized in that the clock retrieval circuit comprises a transistor amplifier loaded by a LC oscillatory circuit of high Q-factor, tuned to the clock frequency and followed by a square-wave shaping amplifier.

9. Decoder in accordance with claim 7, characterized in that the delay circuit comprises:

— a D-type flip-flop (15) connected via its data input to the output (K) of the logic NAND gate (12) and via its clock input to the output ($\overline{H}$) of the clock retrieval circuit, the said D-type flip-flop (15) being triggered by the 0-to-1 transitions of its clock signal, and

— a logic AND gate (16) with two inputs, one connected to the output (L) of the D-type flip-flop (15), the other connected to the output ($\overline{H}$) of the clock retrieval circuit.

10. Regenerator matched to a signal obtained via the transmission method in accordance with claim 2, characterized in that it comprises:

— a clock retrieval circuit delivering at one output (H) a recovered clock signal defining the binary intervals associated with data contained in the signal to be regenerated,

— a delay circuit (17) connected to the output (H) of the clock retrieval circuit and supplying a version of the retrieval clock signal, delayed by a period less than the half binary interval at a multiple close to the binary interval,

— a sampling circuit (19) with one sampling input fed with the signal to be regenerated, connected via sampling control inputs to the outputs (H and $H_1$) of the clock retrieval circuit and of the delay circuit (17), ensuring sampling during a short period in the first half of each binary interval, following a transition of the delayed version of the retrieved clock signal,

— a second sampling circuit (20) with one sampling input fed with a complementary version of the signal to be regenerated, connected via sampling control inputs to the outputs (H and $H_1$) of the clock retrieval circuit and of the delay circuit (17), ensuring sampling during a short period in the first and second halves of each binary interval following transitions of the delayed version of the retrieved clock signal, and

— a bistable flip-flop (21) having a reset-to-one input connected to the output (P) of the first sampling circuit (19) and a reset-to-zero input connected to the output (O) of the second sampling circuit (20) and delivering the regenerated signal.

11. Regenerator in accordance with claim 10 in which the retrieved clock signal delivered by the clock retrieval circuit exhibits 0-to-1 transitions at the start of the binary intervals of the signal to be regenerated, characterized in that the first sampling circuit (19) is a logic AND circuit with its inputs fed with the signal to be regenerated, the retrieved clock signal and its delayed version and delivering a command signal for resetting the bistable flip-flop (21) to one only when the aforementioned signals are simultaneously at logic level 1, and in that the second sampling circuit (20) is a logic circuit with its inputs fed with a complementary version of the signal to be regenerated, the retrieved clock signal and its delayed version and delivering a command signal for resetting the bistable flip-flop (22) only when the signal to be regenerated is at logic level 0 and when the retrieved clock signal and its delayed version are simultaneously at the same logic level.

12. Error detector matched to a signal obtained via the transmission method in accordance with claim 2, characterized in that it comprises:
— a clock retrieval circuit delivering a retrieved and inverted clock signal defining the binary intervals associated with informations contained in the input signal and having trailing edges coincident with the leading edges of the aforementioned signal,
— a logic AND gate (39) with two inputs, one fed with the input signal of the error detector, the other with the retrieved and inverted clock signal delivered by the clock retrieval circuit,
— a logic NOR gate (40) with two inputs connected in parallel with those of the logic AND gate (39),
— a delay circuit (41) connected to the output of the logic NOR gate (40) which, under the action of the retrieved and inverted clock signal, delays by one half binary interval the pulses appearing at the output of the said logic NOR gate (40),
— a frequency doubler (42) connected to the output of the clock retrieval circuit,
— a bidirectional, four-stage (A, B, C, D) shift-register (43) having one clock input connected to the output of the frequency doubler (42), parallel data inputs for stages A and B, and a serial data input for right shift taken to logic level 1; parallel data inputs for stages C and D, and a serial data input for left shift taken to logic level 0; a right-shift control input triggered by the output signal of the logic AND gate (39) and a left-shift control input triggered by the signal at the output of the delay circuit (41), and
— a logic circuit detecting right and left overflows in the shift-register (43), as well as two shifts in the same direction within this latter register, and responding by emitting at the output of the error detector an error signal which is also used to reset the shift-register (43) to its initial state.

**Patentansprüche**

1. Verfahren zur Serienübertragung binärer Informationen, bei dem jede Information in Form eines Elementarsignals übertragen wird, das ein Zeitintervall besitzt, das Binärmoment genannt wird, wobei das Verfahren dadurch gekennzeichnet ist, dass es darin besteht:
— jede Binärinformation eines ersten Werts in ein Signalelement zu übersetzen, das im Wechsel entweder einen ersten Pegel oder einen zweiten Pegel hat, die beide während der ganzen Dauer des Binärmoments aufrechterhalten werden,
— jede Binärinformation des zweiten Werts, die nicht zu einer Folge von n + 1 aufeinanderfolgenden Binärinformationen des zweiten Werts gehört, in ein Signalelement des ersten Pegels zu übersetzen, das während der ersten Hälfte des Binärmoments aufrechterhalten wird, und von einem Signalelement des zweiten Pegels gefolgt wird, das während der zweiten Hälfte des Binärmoments aufrechterhalten wird, und
— die Binärinformationen einer Folge von n + 1 aufeinanderfolgenden Binärinformationen des zweiten Werts gemäss der vorstehenden Regel mit Ausnahme der ersten und der letzten zu übersetzen, wobei die erste, gemäss der vorstehenden Regel, wie eine Binärinformation des zweiten Werts übersetzt wird ausser in dem Fall, in dem die Binärinformationen des ersten Werts, die seit der vorgehenden Folge von n + 1 Binärinformationen des zweiten Werts aufgetreten sind, eine gerade Anzahl haben, in welchem Fall sie gemäss der vorstehenden Regel wie eine Binärinformation des ersten Werts übersetzt wird, während die letzte Binärinformation der Folge gemäss der vorstehenden Regel wie eine Binärinformation des ersten Werts, aber in Verletzung der Wechselregel übersetzt wird.

2. Verfahren nach Anspruch 1, dadurch gekennzeichnet, dass der erste Wert einem Binärwert 1 entspricht, der zweite Wert einem Binärwert 0, der erste Pegel einem logischen Wert 0 und der zweite einem logischen Wert 1.

3. Kodierer zur Durchführung des Verfahrens nach Anspruch 2 ausgehend von einem gemäss HDBn kodierten Signal binärer Informationen und dem zugeordneten Taktsignal, das die von diesen Informationen besetzten Binärmomente definiert, wobei der Kodierer dadurch gekennzeichnet ist, dass er aufweist:
— einen Diskriminierer (1), dessen Eingang (A) dem Informationssignaleingang (A) des Kodierers entspricht, und der die Impulse des Informationseingangssignals in Abhängigkeit von ihrer Polarität trennt und sie unter einer einzigen Polarität wieder ausgibt, und zwar an zwei unterschiedlichen Ausgängen, von denen der eine (B) für die Impulse positiver Ursprungspolarität und der andere (C) für die Impulse negativer Ursprungspolarität reserviert ist,
— einen doppelten Signalformungs-Schaltkreis (2), der mit den Ausgängen (B, C) des Diskriminierers (1) und einem Takteingang ($\overline{H}$) des Kodierers verbunden ist, der unter Einwirkung des Taktsignals die an den Ausgängen (B, C) des Diskriminierers (1) verfügbaren Impulse verbreitert, ihnen ein zyklisches Verhältnis 1/1 gibt und sie an zwei unterschiedlichen Ausgängen liefert, von denen der eine (D) für die Impulse positiver Ursprungspolarität und der andere (E) für die Impulse negativer Ursprungspolarität reserviert ist,

— einen Schaltkreis TOR (3), der mit den Ausgängen (D, E) des doppelten Signalformungs-Schaltkreises (2) und dem Takteingang (H̄) des Kodierers verbunden ist, und der unter Einwirkung des Taktsignals an seinem Ausgang (G) Impulse des zyklischen Verhältnisses 1/2 in Abwesenheit von Impulsen an den Ausgängen (D, E) des doppelten Signalformungs-Schaltkreises (2) ausgibt, und

— einen Summierschaltkreis (4), der mit dem Ausgang (G) des Schaltkreises TOR (3) und demjenigen der Ausgänge (D) des doppelten Signalformungs-Schaltkreises (2) verbunden ist, der die Impulse positiver Ursprungspolarität liefert, und der das Ausgangssignal des Kodierers liefert.

4. Kodierer nach Anspruch 3, dadurch gekennzeichnet, dass der Diskriminierer (1) zwei Komparatoren (5, 6) aufweist, von denen einer (5) durch seinen nichtinvertierenden Eingang an den Informationssignaleingang (A) des Kodierers und durch seinen invertierenden Eingang an eine positive Bezugsspannungsquelle, und der andere (6) durch seinen invertierenden Eingang an den Informationssignaleingang (A) des Kodierers und durch seinen nichtinvertierenden Eingang an eine negative Bezugsspannungsquelle angeschlossen sind.

5. Kodierer nach Anspruch 3, dadurch gekennzeichnet, dass der doppelte Signalformungs-Schaltkreis (21) zwei Kippstufen vom Typ D (7, 8) aufweist, die auf die Übergänge von 0 auf 1 ihres Taktsignals ansprechen, und über ihre Dateneingänge an die Ausgänge des Diskriminieres (1) und über ihre Takteingänge an den Takteingang (H̄) des Kodierers angeschlossen sind, der ein Taktsignal empfängt, das Übergänge von 0 auf 1 in der Mitte der Binärmomente aufweist.

6. Kodierer nach Anspruch 3, dadurch gekennzeichnet, dass der Schaltkreis TOR (3) ein logisches NICHT-ODER-Tor (9) mit zwei Eingängen, die mit den Ausgängen des doppelten Signalformungs-Schaltkreises (2) verbunden sind, und ein logisches UND-Tor (10) mit zwei Eingängen aufweist, von denen einer an den Ausgang des logischen NICHT-ODER-Tors (9) und der andere an den Takteingang (H̄) des Kodierers angeschlossen ist.

7. Dekodierer zur Durchführung des Übertragungsverfahrens nach Anspruch 2, der ein Binärinformationssignal in der Form HDBn liefert, wobei der Dekodierer dadurch gekennzeichnet ist, dass er aufweist:

— einen Taktwiedergewinnungs-Schaltkreis, der ein Taktsignal liefert, das die Binärmomente definiert, die den Binärinformationen zugeordnet sind, die im Eingangssignal des Dekodierers enthalten sind, und deren Übergänge von 0 auf 1 mit denen des Eingangssignals zusammenfallen,

— ein logisches UND-Tor (11) mit zwei Eingängen, von denen der eine dem Eingang des Dekodierers entspricht und der andere mit dem Ausgang (H̄) des Taktwiedergewinnungs-Schaltkreises verbunden ist,

— ein logisches NICHT-ODER-Tor (12) mit zwei Eingängen, die parallel mit den Eingängen des logischen UND-Tors (11) verbunden sind,

— einen Verzögerungsschaltkreis (13), der mit dem Ausgang (K) des logischen NICHT-ODER-Tors (12) und dem Ausgang (H̄) des Taktwiedergewinnungs-Schaltkreises verbunden ist, und der um ein halbes Binärmoment die an dem Ausgang des logischen NICHT-ODER-Tors (12) verfügbaren Impulse verzögert, und

— einen Verstärker (14) mit Differentialeingängen, von denen einer mit dem Ausgang des logischen UND-Tors (11) und der andere mit dem Ausgang des Verzögerungsschaltkreises (13) verbunden ist, der das Ausgangssignal des Dekodierers liefert.

8. Dekodierer nach Anspruch 7, dadurch gekennzeichnet, dass der Taktwiedergewinnungs-Schaltkreis einen Transistorverstärker aufweist, der durch einen Schwingkreis LC mit hohem Überspannungskoeffizienten geladen wird, auf die Taktfrequenz abgestimmt ist und von einem Rechtecksignal-Formungsverstärker gefolgt wird.

9. Dekodierer nach Anspruch 7, dadurch gekennzeichnet, dass der Verzögerungsschaltkreis aufweist:

— eine Kippstufe vom Typ D (15), die über ihren Dateneingang mit dem Ausgang (K) des logischen NICHT-DER-Tors (12) und über ihren Takteingang mit dem Ausgang (H̄) des Taktwiedergewinnungs-Schaltkreises verbunden ist, wobei die Kippstufe vom Typ D (15) auf die Übergänge von 0 auf 1 ihres Taktsignals anspricht, und

— ein logisches UND-Tor (16) mit zwei Eingängen, von denen der eine mit dem Ausgang (L) der Kippstufe vom Typ D (15) und der andere mit dem Ausgang (H̄) des Taktwiedergewinnungs-Schaltkreises verbunden ist.

10. Regeneriervorrichtung, die an ein mit dem Übertragungsverfahren gemäss Anspruch 2 erhaltenes Signal angepasst ist, dadurch gekennzeichnet, dass sie aufweist:

— eine Taktwiedergewinnungs-Schaltkreis, der an einem Ausgang (H) ein wiedergewonnenes Taktsignal liefert, das die den im zu regenerierenden Signal enthaltenen Signalen zugeordneten Binärmomente definiert,

— einen Verzögerungsschaltkreis (17), der mit dem Ausgang (H) des Taktwiedergewinnungs-Schaltkreises verbunden ist, und eine Version des wiedergewonnenen Taktsignals liefert, die um eine Dauer verzögert ist, die geringer als ein halbes Binärmoment oder einen um ganze Binärmomente verlängerten Zeitraum ist,

— einen ersten Probenentnahmeschaltkreis (19), der an einem Probenentnahmeeingang das zu regenerierende Signal empfängt, über Probenentnahme-Steuereingänge an die Ausgänge (H und H₁) des Taktwiedergewinnungs-Schaltkreises und des Verzögerungsschaltkreises (17) angeschlossen ist, und die Probenentnahme während eines kurzen Augenblicks in der ersten Hälfte jedes Binärmoments sichert, nach einem Übergang der verzögerten Version des wiedergewonnenen Taktsignals,

— einen zweiten Probenentnahmeschaltkreis (20), der an einem Probenentnahmeeingang eine komplementierte Version des zu regenerierenden Signals empfängt und über ProbenentnahmeSteuereingänge mit den Ausgängen (H und H₁) des Taktwiedergewinnungs-Schaltkreises und des Verzögerungsschaltkreises (17) verbunden ist, und während eines kurzen Augenblicks in der ersten und zweiten Hälfte jedes Binärmoments nach den Übergängen der verzögerten Version des wiedergewonnenen Taktsignals die Probenentnahme sichert, und

— eine bistabile Kippstufe (21), deren Einseingang mit dem Ausgang (P) des ersten Probenentnahmeschaltkreises (19) und deren Nullsetzungseingang mit dem Ausgang (O) des zweiten Probenentnahmeschaltkreises (20) verbunden ist und das regenerierte Signal liefert.

11. Regeneriervorrichtung nach Anspruch 10, in der das vom Taktwiedergewinnungs-Schaltkreis gelieferte wiedergewonnene Taktsignal Übergänge von 0 nach 1 am Anfang der Binärmomente des zu regenerierenden Signals aufweist, dadurch gekennzeichnet, dass der erste Probenentnahmeschaltkreis (19) ein logischer UND-Schaltkreis ist, der am Eingang das zu regenerierende Signal, das wiedergewonnene Taktsignal und seine verzögerte Version empfängt, und nur dann der bistabilen Kippstufe (21) ein Steuersignal zur Einssetzung liefert, wenn die vorgenannten Signale gleichzeitig auf dem Pegel 1 sind, und dass der zweite Probenentnahmeschaltkreis (20) ein logischer Schaltkreis ist, der am Eingang eine komplementierte Version des zu regenerierenden Signals, das wiedergewonnene Taktsignal und seine verzögerte Version empfängt, und nur dann der bistabilen Kippstufe (22) ein Steuersignal zur Nullsetzung liefert, wenn das zu regenerierende Signal sich auf dem logischen Pegel 0 befindet, und das wiedergewonnene Taktsignal und seine verzögerte Version sich gleichzeitig auf dem gleichen logischen Pegel befinden.

12. Fehlererkennungsvorrichtung, die einem durch das Übertragungsverfahren nach Anspruch 2 erhaltenen Signal angepasst ist, dadurch gekennzeichnet, dass sie aufweist:

— einen Taktwiedergewinnungs-Schaltkreis, der ein wiedergewonnenes und invertiertes Taktsignal liefert, das die den im Eingangssignal enthaltenen Informationen zugeordneten Binärmomente definiert, und dessen ansteigende und absteigende Flanken mit den ansteigenden und abfallenden Flanken des vorgenannten Signals zusammenfallen,

— ein logisches UND-Tor (39) mit zwei Eingängen, von denen einer das Eingangssignal der Fehlererkennungsvorrichtung und der andere das vom Taktwiedergewinnungs-Schaltkreis gelieferte wiedergewonnene und invertierte Signal empfangen,

— ein logisches NICHT-ODER-Tor (40) mit zwei Eingängen, die parallel mit den Eingängen des logischen UND-Tors (39) verbunden sind,

— einen Verzögerungsschaltkreis (41), der mit dem Ausgang des logischen NICHT-ODER-Tors (40) verbunden ist, und der unter Einwirkung des wiedergewonnenen und invertierten Taktsignals die am Ausgang des logischen NICHT-ODER-Tors (40) verfügbaren Impulse um ein halbes Binärmoment verzögert,

— einen Frequenzverdoppler (42), der hinter dem Taktwiedergewinnungs-Schaltkreis angeschlossen ist,

— ein bidirektionelles Schieberegister (43) mit vier Stufen A, B, C und D, das einen mit dem Ausgang des Frequenzverdopplers (42) verbundenen Takteingang aufweist, wobei parallele Dateineingänge für die Stufen A, B und ein serieller Dateneingang für die Rechtsverschiebung den logischen Pegel 1 zugeführt erhalten, während parallele Dateneingänge für die Stufen C, D und ein serieller Dateneingang für die Linksverschiebung den logischen Pegel 0 zugeführt erhalten, und ein Rechtsverschiebungs-Steuereingang durch das Ausgangssignal des logischen UND-Tors (39) und ein Linksverschiebungs-Steuereingang durch das Ausgangssignal des Verzögerungsschaltkreises (41) aktiviert wird, und

— einen logischen Schaltkreis, der den Überlauf nach rechts und nach links des Schieberegisters (43) sowie mehr als zwei gleichsinnige Verschiebungen innerhalb dieses Registers erkennt und als Antwort am Ausgang der Fehlererkennungsvorrichtung ein Fehlersignal ausgibt, das zudem zur Rückstellung des Schieberegisters (43) in den Ursprungszustand verwendet wird.

0 013 990

# FIG.1

# FIG.2

# FIG.3

17

# FIG. 4

# FIG. 5

# FIG. 6

# FIG. 7

# FIG. 8

# FIG. 9

FIG. 10